(19) Europäisches Patentamt
European Patent Office
Office européen des brevets

(11) **EP 4 559 536 A1**

(12) **EUROPEAN PATENT APPLICATION**
published in accordance with Art. 153(4) EPC

(43) Date of publication:
**28.05.2025 Bulletin 2025/22**

(21) Application number: **23873252.3**

(22) Date of filing: **27.09.2023**

(51) International Patent Classification (IPC):
*A62D 1/00* (2006.01)   *A62D 1/06* (2006.01)
*A62C 35/02* (2006.01)   *A62C 3/16* (2006.01)
*H01M 10/42* (2006.01)   *H01M 50/24* (2021.01)
*H01M 50/682* (2021.01)   *H01M 50/204* (2021.01)

(52) Cooperative Patent Classification (CPC):
A62C 2/06; A62C 3/16; A62C 35/02; A62D 1/00;
A62D 1/06; H01M 10/42; H01M 10/658;
H01M 50/204; H01M 50/24; H01M 50/682;
Y02E 60/10

(86) International application number:
**PCT/KR2023/015106**

(87) International publication number:
**WO 2024/072145 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **30.09.2022  KR 20220125266
30.09.2022  KR 20220125271
29.03.2023  KR 20230041417**

(71) Applicant: **LG Chem, Ltd.
Yeongdeungpo-gu
Seoul 07336 (KR)**

(72) Inventors:
• **LEE, Seung Min**
  **Daejeon 34122 (KR)**
• **LEE, Hong Chan**
  **Daejeon 34122 (KR)**
• **JUNG, Jin Mi**
  **Daejeon 34122 (KR)**

(74) Representative: **Hoffmann Eitle
Patent- und Rechtsanwälte PartmbB
Arabellastraße 30
81925 München (DE)**

(54) **COMPOSITION**

(57)   The present specification discloses a composition which is applied to products or elements generating heat or having possibility of ignition or explosion during driving, storage and/or maintenance processes, thereby being capable of effectively responding to the heat, ignition, and explosion. For example, the composition is applied to an article comprising a plurality of the products or elements, thereby being capable of responding to abnormal heat generation, explosion, and ignition occurring in any one element or product, and preventing or minimizing propagation of such heat generation, explosion, and ignition to other adjacent elements or products. The composition also exhibits excellent handleability and storage stability. The present specification may also provide a use of the composition.

## Description

### Technical Field

This application has the benefit of priority based on Korean Patent Application Nos. 10-2022-0125266 and 10-2022-0125271 dated September 30, 2022, and Korean Patent Application No. 10-2023-0041417 dated March 29, 2023, the disclosures of which are incorporated herein by reference in their entirety.

This specification discloses a composition and, a use thereof.

### Background Art

The importance of technology for processing heat generated from products becomes bigger and bigger, but treatment, maintenance, and control of heat in products composed of multiple heat-generating elements (heating elements) are difficult problems.

For example, a battery module or battery pack comprises a plurality of battery cells or a plurality of battery modules, which are located relatively adjacent to each other. Therefore, heat, ignition, and/or explosion generated from one battery cell or battery module may affect other adjacent elements, and in some cases, may cause problems such as chain ignition or chain explosion. In such a product, it is necessary to prevent the heat, explosion, or fire, and the like generated from one element from affecting other adjacent elements.

### Disclosure

### Technical Problem

This specification discloses a composition, and a use thereof. This specification is intended to disclose a composition which is applied to products or elements having possibility of abnormal heat generation, ignition, and/or explosion during driving, storage, and/or maintenance processes, thereby being capable of effectively responding to the heat generation, ignition, and explosion.

For example, the composition disclosed in this specification is applied to an article comprising a plurality of the products or elements, thereby being capable of responding to abnormal heat generation, explosion, and/or ignition occurring in any one element or product, and preventing or minimizing propagation of such heat generation, explosion and/or ignition to other adjacent elements or products.

Also, it is one object of the present application to provide such a composition so that excellent handleability and storage stability are ensured. In addition, it is one object of the present application to provide a use of such a composition.

### Technical Solution

Among the physical properties mentioned in this specification, the physical property, in which a temperature affects the physical property, is a physical property measured at room temperature, unless otherwise specified.

In this specification, the term room temperature is a natural temperature without warming or cooling, which means, for example, any one temperature in a range of about 10°C to 30°C, for example, a temperature of about 23°C or about 25°C or so.

Unless otherwise specified herein, the unit of temperature referred to herein is °C.

Among the physical properties mentioned in this specification, when a pressure affects the results, the relevant physical property is a physical property measured at normal pressure, unless otherwise specified.

In this specification, the term normal pressure is a natural pressure without pressurization or depressurization, where usually a degree in a range of about 700 mmHg to 800 mmHg is referred to as normal pressure.

Among the physical properties mentioned in this specification, when humidity affects the results, the relevant physical property is a physical property measured at humidity in a standard state, unless otherwise specified. The humidity in a standard state means about 40%, 50%, 60% or 65% relative humidity.

This specification discloses a composition. The term composition may mean a mixture of two or more different components. The composition may be a fire extinguishing composition. The fire extinguishing composition is a composition capable of responding to abnormal heat generation, ignition and explosion occurring in any target.

The composition may comprise a solvent. The solvent may be used to reduce heat by heat exchange or the like when heat generation, ignition, and/or explosion has occurred in a target adjacent to the composition, or to remove flame generated by the ignition and/or explosion. Such a solvent can enable the composition to exhibit latent heat as described below, and can also enable a carbonizable organic material as described below to effectively form a carbide at a necessary time point.

For example, the solvent may be a vaporizable solvent. When heat is applied to the solvent due to the abnormal heat generation, ignition and/or explosion, the solvent is vaporized by this heat, and the gas thus generated may reduce the heat, or be applied to removal of the flame. Also, the desired latent heat may appear during the vaporization process.

As a solvent, any non-flammable solvent may be particularly limited and used. For example, a solvent having a freezing point and/or boiling point in a predetermined range may be used as the solvent.

For example, in order that the solvent effectively responds to the heat generation, ignition, and/or explosion, it is necessary to exist in a liquid phase at least at the time point when the heat generation, ignition, and explosion occur, and to this end, the freezing point of the solvent may be controlled.

For example, the lower limit of the freezing point of the solvent may be -5°C, -4°C, - 3°C, -2°C, -1°C, or 0°C or so, and the upper limit thereof may be 10°C, 9°C, 8°C, 7°C, 6°C, 5°C, 4°C, 3°C, or 2°C or so. The freezing point may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The freezing point may be evaluated according to the content described in "2. Freezing point measurement" of Example sections in this specification.

In order that the solvent efficiently responds to the exotherm, ignition and/or explosion, it may be advantageous that it is one that can be vaporized by at least the heat generated by the heat generation, ignition, and explosion, and to this end, the boiling point of the solvent may be controlled.

The lower limit of the boiling point of the solvent may be 80°C, 85°C, 90°C, or 95°C or so, and the upper limit thereof may be 120°C, 115°C, 110°C, or 105°C or so. The boiling point may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits.

As the solvent, an appropriate type which is not particularly limited may be selected and used if it has a freezing point and/or boiling point in the above range and is non-flammable.

A representative example of a non-flammable solvent having a freezing point and/or boiling point in the above range includes water, and accordingly, water may be used as the solvent, but the type of applicable solvent is not limited thereto.

The lower limit of the ratio of the solvent in the composition may be, for example, 10 wt%, 15 wt%, 20 wt%, 25 wt%, 30 wt%, 35 wt%, 40 wt%, 45 wt%, 50 wt%, 55 wt%, 60 wt%, 65 wt%, 70 wt%, 75 wt%, or 80 wt% or so, and the upper limit thereof may be 95 wt%, 90 wt%, 85 wt%, 80 wt%, 75 wt%, 70 wt%, 65 wt%, 60 wt%, 55 wt%, 50 wt%, 45 wt%, or 40 wt% or so. The ratio may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits.

The composition may comprise additional ingredients to ensure proper fire extinguishing functions. For example, the composition may comprise a carbonizable organic material. The carbonizable organic material forms a carbide at a necessary time point (i.e., time point when it is necessary to respond to abnormal heat generation, ignition, and/or explosion). The carbide thus formed can block heat transfer.

In one example, by applying the carbonizable organic material in the solvent together with a carbonized catalyst generating agent to be described below, it is also possible to obtain an effect of allowing formation of a carbide that can effectively respond to abnormal heat generation, ignition, and/or explosion even when a small amount of the carbonizable organic material is applied.

As the carbonizable organic material, any appropriate type can be applied without any special limitation if it is a material forming a carbide when exposed to heat or flame.

In one example, as the carbonizable organic material (for example, starch), one having a gelatinization viscosity within a certain range may be used. Such a gelatinization viscosity is related to the characteristics of the carbonizable organic material when present in a solvent, where the carbide can be formed more effectively through control of the gelatinization viscosity. In addition, the viscosity and thixotropic index of the composition may also be adjusted to an appropriate level through control of the gelatinization viscosity. The lower limit of the gelatinization viscosity of the carbonizable organic material (e.g., starch) may be 150, 200, 250, 300, 350, 400, 450, 500, 550, 650, 700, 750, 800, 850, 900, 950, or 1,000 or so, and the upper limit thereof may be 5,000, 4,500, 4,000, 3,500, 3,000, 2,500, 2,000, 1,500, 1,000, 950, 900, 850, 800, 750, 700, 650, 600, 500, 450, 400, 350, or 300 or so. The gelatinization viscosity may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The gelatinization viscosity may be measured by a method described in "11. Evaluation of gelatinization viscosity" of Example sections in this specification, where the unit is BU (Brabeder unit).

An example of such an organic material may be exemplified by saccharides such as sorbitol or mannitol, polysaccharides such as starch or dextrin (e.g., MC (maleated cyclodextrin) or metal salts of MC, etc.), polyhydric alcohols such as pentaerythritol, dipentaerythritol, or THEIC (tris(hydroxyethyl)isocyanurate), cellulose, BSPPO (bi(4-methoxy-1-phospha-2,6,7-trioxabicyclo[2.2.2]-octan-1-sulfide)phenylphosphate), lignin (alkali lignin or urea modified liginin, etc.), melamine compounds such as methylol melamine, phenol-formaldehyde resins and/or carbonizable polymers (char forming polymers) such as PA6T (poly-hexa methylene terephthalamide), but is not limited thereto.

A material that can be typically applied as the carbonizable organic material is starch. The starch is relatively easily-obtainable, which can form suitable carbides when exposed to heat or flame.

The type of starch may be adjusted in order that the carbide is efficiently formed and the formed carbide effectively exerts the desired fire extinguishing or insulating effect.

For example, as the starch, starch containing amylose and amylopectin, the ratio of which is adjusted to an appropriate level, may be used. As is known, amylopectin and amylose are types of polysaccharides mainly found in plants, and the starch of polysaccharides is composed of amylose and amylopectin. The amylose is composed of glucose molecules linked by $\alpha$ (1→4) glycosidic bonds and has a linear chain structure, whereas the amylopectin has relatively short and highly branched chains. The amylose crystallizes relatively easily compared to the amylopectin, and the amylopectin has a relatively higher solubility in water than the amylose.

The desired composition can be provided more efficiently by using starch that amylose and amylopectin having the above characteristics are present in an appropriate ratio. For example, in the starch containing amylose and amylopectin, the lower limit of the weight ratio of the amylopectin relative to 100 parts by weight of the amylose may be 150 parts by weight, 200 parts by weight, 250 parts by weight, or 300 parts by weight or so, and the upper limit thereof may be 900 parts by weight, 850 parts by weight, 800 parts by weight, 750 parts by weight, 700 parts by weight, 650 parts by weight, 600 parts by weight, 550 parts by weight, 500 parts by weight, 450 parts by weight, 400 parts by weight, 350 parts by weight, or 300 parts by weight or so. The ratio may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The ratio of amylose and amylopectin may be measured by a method described in "12. Measurement of amylopectin and amylose contents" of Example sections in this specification.

As the starch, starch having a molecular weight, for example, a weight average molecular weight (Mw) within a predetermined range, may be used. For example, the lower limit of the weight average molecular weight of the starch may be 200,000 g/mol, 250,000 g/mol, 300,000 g/mol, 350,000 g/mol, 400,000 g/mol, 450,000 g/mol, 500,000 g/mol, 550,000 g/mol, 600,000 g/mol, 650,000 g/mol, 700,000 g/mol, 750,000 g/mol, 800,000 g/mol, 850,000 g/mol, 900,000 g/mol, 950,000 g/mol, 1,000,000 g/mol, 1,500,000,000 g/mol, 2,000,000 g/mol, 2,500,000 g/mol, 3,000,000 g/mol, 3,500,000 g/mol, 4,000,000 g/mol, 4,500,000 g/mol, 5,000,000 g/mol, 5,500,000 g/mol, 6,000,000 g/mol, 6,500,000 g/mol, 7,000,000 g/mol, 7,500,000 g/mol, 8,000,000 g/mol, 8,500,000 g/mol, 9,000,000 g/mol, 9,500,000 g/mol, 10,000,000 g/mol, 20,000,000 g/mol, 30,000,000 g/mol, 40,000,000 g/mol, or 50,000,000 g/mol or so, and the upper limit thereof may be 1,000,000,000 /mol, 900,000,000 /mol, 800,000,000 /mol, 700,000,000 /mol, 600,000,000 /mol, 500,000,000 /mol, 400,000,000 /mol, 300,000,000 /mol, 200,000,000 /mol, 150,000,000 /mol, 100,000,000 /mol, 90,000,000 /mol, 80,000,000 /mol, 70,000,000 /mol, or 60,000,000 /mol or so. The molecular weight may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The starch having the above molecular weight (Mw) can more effectively form carbides having a desired function (for example, an insulating function) when exposed to heat or flame.

The lower limit of the weight ratio of the carbonizable organic material relative to 100 parts by weight of the solvent may be 0.01 parts by weight, 0.5 parts by weight, 1 part by weight, 2 parts by weight, 3 parts by weight, 4 parts by weight, 5 parts by weight, 6 parts by weight, 7 parts by weight, 8 parts by weight, 9 parts by weight, 9.5 parts by weight, or 10 parts by weight or so, and the upper limit thereof may be 50 parts by weight, 45 parts by weight, 40 parts by weight, 35 parts by weight, 30 parts by weight, 29 parts by weight, 28 parts by weight, 27 parts by weight, 26 parts by weight, 25 parts by weight, 24 parts by weight, 23 parts by weight, 22 parts by weight, 21 parts by weight, 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, 7 parts by weight, 6 parts by weight, or 5 parts by weight or so. The ratio may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The carbonizable organic material contained in such a ratio can effectively form carbides in the composition as needed, and can ensure that the composition has excellent handleability and storage stability in whole.

The composition may comprise a carbonized catalyst generating agent as an additional ingredient for securement of appropriate fire extinguishing functions. For example, the composition may comprise a carbonized catalyst generating agent and a carbonizable organic material. The combination of the above components causes a carbide of the carbonizable organic material to be more effectively formed at a necessary time point (i.e., time point when it is necessary to respond to abnormal heat generation, ignition, and/or explosion). For example, the carbonized catalyst generating agent may promote the carbonization action of the carbonizable organic material. The carbonized catalyst generating agent forms acids, or acid-based salts or ions at high temperatures, and these components may serve to promote the carbonization action. In addition, depending on the type of carbonized catalyst generating agent, flame retardancy may be imparted to the carbide, or a component that alone exhibits flame retardancy may be formed. For example, the carbonized catalyst generating agent to be described below forms a phosphoric acid-based material by decomposition at high temperature, and the like, and this material can be polymerized to have flame retardancy. Accordingly, the carbonized catalyst generating agent may be included in the composition to enable the composition to respond to the abnormal heat generation, ignition, and/or explosion.

The carbonized catalyst generating agent needs to be applied by being dispersed in the solvent along with the carbonizable organic material, where one having solubility in the solvent (for example, water) above a certain level must be used as the carbonized catalyst generating agent. That is, the components dispersed in the solvent can more effectively contact each other at a necessary time point and interact with each other to efficiently form the desired carbide, and the like. In addition, by controlling the solubility of the carbonized catalyst generating agent in the solvent, an agglomeration or phase separation phenomenon of components in the composition does not occur, and the formative action of the above-described carbide and/or formation of a flame retardant can also proceed more effectively. For example, the lower limit of the solubility of the carbonized catalyst generating agent in the solvent may be 5 g, 10 g, 15 g, 20 g, 25 g, 30 g, 35 g, or 40 g or so, and the upper limit thereof may be 1000 g, 900 g, 800 g, 700 g, 600 g, 500 g, 400 g, 300 g, 200 g, 100 g, 90 g, 80 g, 70 g, 60 g, 50 g, 40 g, or 30 g or so. The solubility may be within a range of more than or equal to, or more than any one of the above-described lower limits; or within a range of less than or equal to, or less than any one of the above-described upper limits while being more than or equal to, or more than any one of the above-described lower limits. The solubility is the weight (g) of the carbonized catalyst generating agent that can be maximally dissolved in 100 g of the solvent (e.g. water) at 25°C. The solubility is measured by a method described in "10. Solubility evaluation" of Example sections in this specification.

The carbonized catalyst generating agent may be particularly limited and used if it may decompose at a high temperature to form acids or acid-based salts, or ions, and the like, and has the above solubility. An example of the carbonized catalyst generating agent includes phosphoric acid compounds such as phosphoric acid and phosphoric salts, phosphonate compounds, or phosphate compounds. The carbonized catalyst generating agent may be, for example, monobasic or dibasic ammonium phosphate, urea phosphate, guanyl urea phosphate, or ammonium polyphosphate, and the like, and one or two or more of the foregoing may be selected and used.

The carbonized catalyst generating agent may be present in the composition in an appropriate amount considering the intended effect. For example, the lower limit of the weight ratio of the carbonized catalyst generating agent relative to 100 parts by weight of the solvent may be 0.5 parts by weight, 1 part by weight, 5 parts by weight, 7 parts by weight, 10 parts by weight, 11 parts by weight, 12 parts by weight, 13 parts by weight, 14 parts by weight, 15 parts by weight, 16 parts by weight, 17 parts by weight, 18 parts by weight, 20 parts by weight, 25 parts by weight, 30 parts by weight, 35 parts by weight, or 38 parts by weight or so, and the upper limit thereof may be 100 parts by weight, 95 parts by weight, 90 parts by weight, 85 parts by weight, 80 parts by weight, 75 parts by weight, 70 parts by weight, 65 parts by weight, 60 parts by weight, 55 parts by weight, 50 parts by weight, 45 parts by weight, 40 parts by weight, 35 parts by weight, 30 parts by weight, 25 parts by weight, 20 parts by weight, 15 parts by weight, or 10 parts by weight or so. The ratio may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. If the content of the carbonized catalyst generating agent, which has excellent solubility in the solvent, is too high, the amount of solvent applicable to the composition is limited, and the vaporization characteristics of the solvent are affected by the carbonized catalyst generating agent dissolved in the solvent, whereby it may become difficult to secure the desired latent heat, so that the amount of the carbonized catalyst generating agent may be adjusted in consideration of this matter.

The composition may comprise optional additional ingredients for securement of appropriate fire extinguishing functions or control of physical properties such as viscosity or thixotropy.

For example, the composition may comprise a water-absorbing polymer as the additional ingredient.

The water-absorbing polymer is a polymer having a property capable of absorbing water.

In one example, the water-absorbing polymer may be a so-called hydrogel polymer or hydrogel, which is generally defined as a crosslinked hydrophilic polymer. Such a polymer is also known as an SAP (Super Adsorbent Polymer).

The water-absorbing polymer is a material that can absorb moisture tens to thousands of times its own weight.

Such a material allows the composition of the present application to exist in a gel state in whole, thereby performing the function of ensuring handleability and storage stability.

In the present application, the type of applicable water-absorbing polymer is not particularly limited, and any polymer which is generally applicable as the SAP may be used without limitation.

Usually, a polyacrylate-based vinyl polymer is used as the above material. Here, the polyacrylate-based polymer is a polymer manufactured from an acrylate-based monomer, and if necessary, other comonomers may be further used to form the polymer.

The water-absorbing properties may be adjusted so that the water-absorbing polymer exhibits properties suitable for uses of the present application.

For example, the lower limit of the centrifuge retention capacity (CRC) of the water-absorbing polymer according to EDANA (European Disposables and Nonwovens Association) method WSP 241.3 may be 12 g/g, 13 g/g, 14 g/g, 15 g/g, 16 g/g, 17 g/g, 18 g/g, 19 g/g, 20 g/g, 21 g/g, 22 g/g, 23 g/g, 24 g/g, 25 g/g, 26 g/g, 27 g/g, 28 g/g, 29 g/g, 30 g/g, 31 g/g, 32 g/g, or 33 g/g or so, and the upper limit thereof may be 60 g/g, 55 g/g, 50 g/g, 45 g/g, 40 g/g, or 35 g/g or so. The centrifuge retention capacity (CRC) may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The centrifuge retention capacity (CRC) may be evaluated by a method described in "6. CRC (Centrifuge Retention Capacity)" of Example sections in this specification.

For example, the lower limit of the absorption under pressure (AUP) of the water-absorbing polymer at 0.3 psi according to EDANA (European Disposables and Nonwovens Association) method WSP 242.3 may be 4 g/g, 6 g/g, 8 g/g, 10 g/g, 12 g/g, 14 g/g, 16 g/g, 18 g/g, 20 g/g, 22 g/g, 24 g/g, 26 g/g, 27 g/g, or 28 g/g or so, and the upper limit thereof may also be 40 g/g, 38 g/g, 36 g/g, 34 g/g, 32 g/g, or 30 g/g or so. The absorption under pressure (AUP) may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The absorbency under pressure (AUP) may be evaluated by a method described in "7. AUP (Absorption Under Pressure)" of Example sections in this specification.

The water-absorbing polymer having the above absorption can be combined with other components of the composition of the present application to exhibit the desired properties.

In one example, the water-absorbing polymer may be a particulate polymer. The weight-based size distribution of the particulate water-absorbing polymer may be controlled to secure the desired viscosity properties and fire extinguishing function through the application of the water-absorbing polymer. In this specification, the term weight-based size distribution of the water-absorbing polymer is a size distribution measured according to the description of "14. Weight-based size distribution of water-absorbing polymer" of Example sections in this specification, which means a size distribution, in which a sample of the particulate water-absorbing polymer is divided into a fraction with a size of less than 150 $\mu$m (hereinafter, may be referred to as "A fraction"), a fraction within a range of 150 $\mu$m to 300 $\mu$m (hereinafter, may be referred to as "B fraction"), a fraction within a range of 300 $\mu$m to 600 $\mu$m (hereinafter, may be referred to as "C fraction"), a fraction within a range of 600 $\mu$m to 850 $\mu$m (hereinafter, may be referred to as "D fraction"), and a fraction exceeding 850 $\mu$m (hereinafter, may be referred to as "E fraction"), and each fraction weight is expressed as a percentage (weight ratio of each fraction) relative to the weight of the entire particulate water-absorbing polymer sample. The weight-based size distribution may be obtained according to EDANA method WSP 220.3 standard in accordance with the description of "17. Weight-based size distribution of water-absorbing polymer" in Example sections above.

The particulate water-absorbing polymer may have a maximum weight size in a range of 150 $\mu$m to 850 $\mu$m in the weight-based size distribution. Here, the maximum weight size is the size of the fraction showing the highest weight ratio among the weight ratio of the A fraction, the weight ratio of the B fraction, the weight ratio of the C fraction, the weight ratio of the D fraction, and the weight ratio of the E fraction. That is, the matter that the maximum weight size is in the range of 150 $\mu$m to 850 $\mu$m means that the weight ratio of the particulate water-absorbing polymer belonging to any one or two or more of the B fraction, C fraction, and D fraction shows the largest value. Since the respective weight ratios of two fractions are the same and the weight ratio thereof may also represent the highest value among the respective weight ratios of the total fractions, the fraction with the maximum weight size may also be one or two or more. In one example, the fraction with the largest weight size may be the C fraction among the B, C, and D fractions. Therefore, the maximum weight size in the weight-based size distribution may also be in the range of 300 $\mu$m to 600 $\mu$m.

The lower limit of the weight ratio in the fraction representing the maximum weight size in the weight-based size distribution of the particulate water-absorbing polymer (i.e., the weight ratio of the water-absorbing polymer belonging to the maximum weight size in the weight-based size distribution) may be 35 wt%, 40 wt%, 45 wt%, 50 wt%, 55 wt%, 60 wt%, 65 wt%, 70 wt%, 71 wt%, 72 wt%, 73 wt%, or 74 wt% or so, and the upper limit thereof may be wt%, 95 wt%, 90 wt%, 85 wt%, 80 wt%, 79 wt%, 78 wt%, 77 wt%, 76 wt%, or 75 wt% or so. The weight ratio may be within a range of more than or equal to, or more than any one of the above-described lower limits; or within a range of less than or equal to, or less than any one of the above-described upper limits while being more than or equal to, or more than any one of the above-described lower limits.

If the maximum weight size is too small and/or the weight ratio in the fraction representing the maximum weight size is too small, the composition does not properly form the desired gel, whereby handling and storage properties may be lowered, or it may not exert a fire extinguishing function, so that an appropriate particulate water-absorbing polymer may be selected in consideration of this matter.

When included, the lower limit of the weight ratio of the water-absorbing polymer relative to 100 parts by weight of the solvent may be 0.01 parts by weight, 0.03 parts by weight, 0.05 parts by weight, 0.07 parts by weight, 0.09 parts by weight, 0.1 parts by weight, 0.5 parts by weight, 1 part by weight, 2 parts by weight, 3 parts by weight, 4 parts by weight, 5 parts by weight, 6 parts by weight, 7 parts by weight, 8 parts by weight, or 9 parts by weight or so, and the upper limit thereof may be 30 parts by weight, 29 parts by weight, 28 parts by weight, 27 parts by weight, 26 parts by weight, 25 parts by weight, 24 parts by weight, 23 parts by weight, 22 parts by weight, 21 parts by weight, 20 parts by weight, 19 parts by weight, 18 parts by weight, 17 parts by weight, 16 parts by weight, 15 parts by weight, 14 parts by weight, 13 parts by weight, 12 parts by weight, 11 parts by weight, 10 parts by weight, 9 parts by weight, 8 parts by weight, 7 parts by weight, 6 parts by weight, 5 parts by weight, 4 parts by weight, 3 parts by weight, 2 parts by weight, 1 part by weight, 0.9 parts by weight, 0.8 parts by weight, 0.7 parts by weight, 0.6 parts by weight, 0.5 parts by weight, 0.4 parts by weight, 0.3 parts by weight, or 0.2 parts by weight or so. The ratio may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits.

For example, the composition may further comprise a freezing point regulator if necessary. As described above, in order that the composition exerts a fire extinguishing function, it is advantageous for the solvent, and the like to be in a liquid phase at the time point when heat generation, ignition and/or explosion, which must be controlled, occur. However, depending on the applied use, the environment in which the composition is placed may be at a temperature below the freezing point of the composition or solvent, and in this case, there is a high possibility that the composition does not exist in the liquid phase. Therefore, in this case, it is necessary to adjust the freezing point of the composition by adding an appropriate freezing point regulator.

The type of freezing point regulator which is applicable in this process is not particularly limited, and an additive known to be capable of controlling the freezing point of the solvent or composition by a so-called freezing point depression phenomenon may be used.

For example, alcohol may be used as the freezing point regulator.

For example, as the alcohol, alcohol with a boiling point within a predetermined range may be used. For example, the lower limit of the boiling point of the alcohol may be 150°C, 170°C, or 190°C or so, and the upper limit thereof may be 300°C, 280°C, 260°C, 240°C, 220°C, or 200°C or so. The boiling point may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits.

For example, as the alcohol, alcohol whose molar mass is within a predetermined range may be used. For example, the lower limit of the molar mass of the alcohol may be 20 g/mol, 30 g/mol, 40 g/mol, 50 g/mol, 60 g/mol, 70 g/mol, 80 g/mol, or 90 g/mol or so, and the upper limit thereof may be 300 g/mol, 280 g/mol, 260 g/mol, 240 g/mol, 220 g/mol, 200 g/mol, 180 g/mol, 160 g/mol, 140 g/mol, 120 g/mol, 100 g/mol, 90 g/mol, 80 g/mol, or 70 g/mol or so. The molar mass may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits.

The type of the applicable alcohol is not particularly limited, and for example, monohydric alcohols such as methanol or propylene glycol methyl ether, glycols such as ethylene glycol or propylene glycol, or polyhydric alcohols such as glycerin may be applied.

If applicable, the alcohol may be present such that a concentration calculated based on the solvent is within a predetermined range. The concentration at this time is a molal concentration, which may can be specifically obtained by dividing the number of moles of the alcohol applied to the composition by the weight (unit: kg) of the solvent.

Therefore, for example, the alcohol may be present in the composition in an amount such that M according to Equation 1 below is within a predetermined range.

[Equation 1]

$$M = Mol/W$$

In Equation 1, Mol is the number of moles of the alcohol contained in the composition, and W is the weight (unit: Kg) of the solvent.

In one example, the lower limit of M (molal concentration) may be 2, 4, 6, 8, 10, 12, 14, 16, 18, 20, or 22 or so, and the upper limit thereof may be 50, 48, 46, 44, 42, 40, 38, 36, 34, 32, 30, 28, 26, 24, 22, 20, 18, or 17 or so. The M (molal concentration) may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. However, the molal concentration may be adjusted considering the desired freezing point range.

Such a composition may exhibit unique physical properties through a combination of the above-described components.

For example, the composition may exhibit an entirely controlled freezing point. For example, the lower limit of the freezing point of the composition may be -50°C, -45°C, -40°C, -35°C, -30°C, -25°C, -20°C, -15°C, or -10°C or so, and the upper limit thereof may be -15°C, -20°C, -25°C, -30°C, -35°C, or -40°C or so. The freezing point may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. The freezing point may be evaluated according to the content described in "2. Freezing point measurement" of Example sections in this specification.

The composition may have a controlled viscosity and/or thixotropic index.

For example, the lower limit of the viscosity of the composition may be 5,000 cP, 5,500 cP, 6,000 cP, 6,500 cP, 7,000 cP, 7,500 cP, 8,000 cP, 8,500 cP, 9,000 cP, 9,500 cP, 10,000 cP, 15,000 cP, 20,000 cP, 25,000 cP, 30,000 cP, 35,000 cP, 40,000 cP, or 45,000 cP or so, and the upper limit thereof may be 100,000 cP, 80,000 cP, 60,000 cP, 50,000 cP, 40,000 cP, 20,000 cP, It may be around 10,000 cP, or 9,000 cP or so. The viscosity may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. Such a viscosity is a value measured at room temperature (about 25°C) and a rotation speed of 5 rpm. The viscosity may be measured by a method described in "1. Measurement of viscosity and thixotropic index" of Example sections in this specification.

For example, the lower limit of the thixotropic index of the composition may be 2, 3, 4, or 4.5 or so, and the upper limit thereof may be 20, 18, 16, 14, 12, 10, 8, 6, 5, or 4 or so. The thixotropic index may be within a range of less than or equal to, or less than any one of the above-described upper limits; within a range of more than or equal to, or more than any one of the above-described lower limits; or within a range of less than or equal to, or less than any one of the above-described upper limits while being more than or equal to, or more than any one of the above-described lower limits. This thixotropic index is a value obtained by dividing the viscosity measured at room temperature (about 25°C) and a rotation speed of 0.5 rpm by the viscosity measured at room temperature (about 25°C) and a rotation speed of 5 rpm. The thixotropic index may be measured by a method described in "1. Measurement of viscosity and thixotropic index" of Example sections in this specification.

A composition having such viscosity and/or thixotropic index may exhibit excellent handleability and storage stability, and the like.

The freezing point, viscosity, and thixotropic index of the composition as described above can be secured through a combination of the components of each composition as described above.

Also, the composition may further comprise various types of known additives if the above-described physical properties are not impaired.

The present application also relates to a fire extinguishing pack manufactured using the composition. The fire extinguishing pack can be manufactured by loading the composition into an appropriate case, considering storage easiness and handling stability of the composition.

Therefore, the fire extinguishing pack may comprise: a case; and the composition present in the case.

The type of case applied to the manufacture of the fire extinguishing pack is not particularly limited, which may be applied if it is capable of properly storing the composition. The composition comprises volatile components such as the solvent, so that in one example, a case having a so-called WVTR (Water Vapor Transmission Rate) in a predetermined range may be used as the case.

For example, the upper limit of the so-called WVTR (Water Vapor Transmission Rate) in the above case may be 0.5 g/m²·day, 0.45 g/m²·day, 0.4 g/m²·day, 0.35 g/m²·day, 0.3 g/m²·day, 0.25 g/m²·day, 0.2 g/m²·day, 0.15 g/m²·day, or 0.1 g/m²·day or so, and the lower limit thereof may be 0 g/m²·day, 0.1 g/m²·day, 0.2 g/m²·day, 0.3 g/m²·day, 0.4 g/m²·day, or 0.5 g/m²·day. The WVTR may be within a range of less than or equal to, or less than any one of the above-described upper limits; or within a range of more than or equal to, or more than any one of the above-described lower limits; or within a range of less than or equal to, or less than any one of the above-described upper limits while being more than or equal to, or more than any one of the above-described lower limits. The WVTR may be measured by a method described in "8. WVTR (Water Vapor Transmission Rate) evaluation" of Example sections in this specification.

Such a case may be manufactured using various known materials. For example, the case may be constructed using appropriate inorganic films and/or organic films, or may be constructed by laminating the same.

The organic film may be exemplified by cellulose-based polymer films; COP (cyclo olefin copolymer) films; acrylic polymer films; polyolefin films; PVA(polyvinyl alcohol) films; PES (poly ether sulfone) films; PEEK (polyetheretherketone) films; PPS (polyphenylsulfone) films; PEI (polyetherimide) films; PEN (polyethylenenaphthatlate) films; polyester films; PI (polyimide) films; polysulfone (PSF) films and/or PAR (polyarylate) films, and the like.

Here, the applicable inorganic film may be exemplified by metal films, metal oxide films, metal nitride films, or metal oxynitride films, and the like, and for example, a metal film, a metal oxide film, a metal nitride film, or a metal oxynitride film, and the like, containing one or more selected from the group consisting of In, Sn, Pb, Au, Cu, Ag, Zr, Hf, Zn, Al, Si, La, Ti, and Ni may be used.

By selecting appropriate types of these films and combining them as needed, a desired type of case may be provided.

Here, the form of the case or fire extinguishing pack is determined depending on the intended use, which is not particularly limited.

For example, as described below, when applying a fire extinguishing pack to a battery module and applying it between a plurality of battery cells included in the module, the fire extinguishing pack may be manufactured by manufacturing the shape of the case to be the same as, or like the battery cell, and then inserted between the battery cells.

This specification also discloses electronic equipment or devices to which the composition or fire extinguishing pack is applied.

The type of electronic equipment or device is not particularly limited. For example, the composition or fire extinguishing pack may be applied to equipment or devices, and the like, where there is a risk of abnormal heat generation, ignition and/or explosion in driving, maintenance and/or storage processes, and the relevant abnormal phenomenon must be controlled.

An example of the above equipment or device includes a battery. Particularly, in a battery module constructed using a plurality of battery cells, it is important to prevent abnormal heat generation, ignition and/or explosion occurring in one battery cell from spreading to other adjacent battery cells.

Therefore, the present application may be related to a battery module comprising the composition or fire extinguishing pack.

Such a battery module may basically comprise a plurality of battery cells; and the composition or fire extinguishing pack disposed between the battery cells.

If the composition or fire extinguishing pack is applied, the specific configuration of the battery module, for example, the type of battery cell, and the like, is not particularly limited, and known materials may be applied. For example, a known pouch-shaped, rectangle-shaped, or cylindrical battery cell may be used as the battery cell.

The manufacturing method of the battery module is not particularly limited, and for example, as described above, a method of manufacturing a fire extinguishing pack as in the form of a battery cell, and then placing the fire extinguishing pack at a required position during the manufacturing process of the battery module, and the like may be used.

**Advantageous Effects**

The present specification discloses a composition which is applied to products or elements generating heat or having possibility of ignition or explosion during driving, storage and/or maintenance processes, thereby being capable of effectively responding to the heat, ignition, and explosion. For example, the composition is applied to an article comprising a plurality of the products or elements, thereby being capable of responding to abnormal heat generation, explosion, and ignition occurring in any one element or product, and preventing or minimizing propagation of such heat generation, explosion, and ignition to other adjacent elements or products. The composition also exhibits excellent handleability and storage stability. The present specification may also provide a use of the composition.

**Mode for Invention**

Hereinafter, the composition disclosed herein will be described in more detail with reference to Examples and Comparative Examples, but the scope of the composition is not limited by the following examples.

**1. Measurement of viscosity and thixotropic index**

A viscosity was evaluated at about 25°C using a viscosity measuring device (Brookfield viscometer, RV type). Using a spindle #63, the viscosity was measured at 25°C while changing the rotation speed (shear rate) within a range of 0.5 rpm to 5 rpm. A sample (composition) was loaded into the viscosity measuring device, and the rotation speed was maintained for about 1 minute or so at each rotation speed to stabilize the viscosity, and then the viscosity was measured.

A thixotropic index ($V_{0.5}/V_5$) was obtained by dividing the viscosity ($V_{0.5}$) at a rotation speed of 0.5 rpm by the viscosity ($V_5$) at a rotation speed of 5 rpm among the viscosities measured in the above manner.

### 2. Freezing point measurement

A freezing point was evaluated by the method specified in OECD Guideline for testing of chemicals 102 (adopted by the council on 27th July 1995).

### 3. Convection test

A composition was loaded into an aluminum dish with a bottom thickness of 0.2 mm or so. The loading was made such that the composition had a thickness of 3 mm or so. The aluminum dish was placed on a temperature sensor (k-type thermocoupler), and a flame was applied vertically toward the composition at a height of 1 inch or so from the composition loaded on the dish. The flame was applied using butane gas and a torch. The temperature was measured with the temperature sensor while applying the flame for 3 minutes or so, and it was evaluated according to the following criteria.

<Evaluation criteria>

PASS: When the temperature sensor's measurement temperature remains less than 300°C

NG: When a temperature above 300°C is measured from the temperature sensor, or it is observed for the aluminum dish to be melted

### 4. Chain ignition test

Rectangular batteries were disposed side by side with an interval of 3 mm or so, and a pack (fire extinguishing pack) comprising a composition was placed therebetween. As the rectangular battery, CATL's product (120 Ah, 3.2 V, size = thickness × breadth × width = 48 × 174 × 165) was used, and applied to the test in a 100% charged state. In the above arrangement, battery ignition was induced in one rectangular battery according to SAE J2464:2009 standard, and chain ignition in the other cell was checked. The ignition of the battery was caused by penetrating a nail with a diameter of about 5 mm into the rectangular battery at a speed of 25 mm/sec (Nail Penetration method).

<Evaluation criteria>

PASS: When no ignition occurs in the other battery cell other than the battery cell through which the nail has penetrated

NG: When ignition occurs in the other battery cell other than the battery cell through which the nail has penetrated

### 5. Storage stability evaluation

A fire extinguishing pack was stored in an oven at a temperature of about 35°C or so for 1,000 hours, and the weight change before and after storage in the oven was measured. When the weight change before and after storage was 1% or more, it was evaluated as NG, and when the weight change was less than 1% or no weight change was, it was evaluated as Pass.

### 6. CRC (Centrifuge Retention Capacity)

A CRC was measured according to EDANA WSP 241.3. About 0.2 g (W0) of a water-absorbing polymer was placed in a nonwoven envelope, sealed, and then submerged in a physiological saline solution at room temperature. As the physiological saline solution, an aqueous NaCl solution with a concentration of 0.9 wt% was used. The state was maintained for 30 minutes or so, moisture was removed from the envelope for 3 minutes at a condition of 250 G using a centrifuge, and then the mass (g, W2) of the envelope was measured.

The same operation was performed on the same nonwoven envelope without any water-absorbing polymer, and the mass (g, W1) was measured.

The CRC (g/g) was calculated by substituting the measurement results into Equation A below.

The evaluation was conducted under a constant temperature and humidity condition ($23 \pm 1°C$, relative humidity: $50 \pm 10\%$).

[Equation A]

$$CRC\ (g/g) = \{[W2(g) - W1(g)]/W0(g)\} - 1$$

**7. AUP (Absorption Under Pressure)**

An AUP was measured according to EDANA method WSP 242.3. A 400-mesh stainless steel wire net was mounted on the bottom of a plastic cylinder with an inner diameter of about 60 mm, and 0.0 g (W0) (0.90 g) of a water-absorbing polymer was evenly sprayed on the wire net, and then a piston capable of evenly imparting a load of 0.7 psi was installed thereon. The piston was slightly smaller than an outer diameter of 60 mm, had no gap with the inner wall of the cylinder, and was installed so that it could move up and down. The weight (g, W3) of the device was measured.

A glass filter with a diameter and a thickness of 90 mm and 5 mm, respectively, was placed inside a Petro dish with a diameter of 150 mm, and a physiological saline solution was added so that it was at the same level as the upper surface of the glass filter. As the physiological saline solution, an aqueous NaCl solution with a concentration of 0.9 wt% was used. One sheet of filter paper with a diameter of 90mm was placed thereon. The measuring device was placed on the filter paper, and the physiological saline solution was absorbed for 1 hour under a load of 0.7 psi. Thereafter, the measuring device was lifted, and its weight (g, W4) was measured.

The AUP (g/g) was evaluated by substituting the obtained values into Equation B below. The evaluation was conducted under a constant temperature and humidity condition ($23 \pm 1°C$, relative humidity: $50 \pm 10\%$).

[Equation B]

$$AUP(g/g) = [W4(g) - W3(g)]/W0(g)$$

**8. WVTR (Water Vapor Transmission Rate) evaluation**

A WVTR of an outer shell for manufacturing a case of a fire extinguishing pack was evaluated according to ASTM F1249 standard under conditions of 38°C and 100% relative humidity.

**9. Handleability evaluation**

Handleability was evaluated by evaluating handling easiness during a process of inserting the manufactured fire extinguishing pack between battery cells and a process of transporting the fire extinguishing pack, and observing no phase separation in the composition as well.

If both of handling easiness and no phase separation below were PASS, the final handleability evaluation result was set to PASS, and if any one of them was NG, the final handleability evaluation result was set to NG.

<Handling easiness evaluation criteria>

PASS: When the fire extinguishing pack is not bent or sagging, and the composition inside the fire extinguishing pack is not tilted in one direction during the process of inserting the fire extinguishing pack between battery cells, and the fire extinguishing pack is not bent or sagging, and its original shape is maintained well during the process in which the robot arm or worker transport the fire extinguishing pack with both hands

NG: When any one of the case where the fire extinguishing pack is bent or sagging during the process of inserting the fire extinguishing pack between battery cells; the case where the automated process does not proceed well because the composition inside the fire extinguishing pack is tilted in one direction; and the case where the fire extinguishing pack is bent or sagging, and thus its original shape is not maintained well during the process in which the robot arm or worker transport the fire extinguishing pack with both hands, occurs

<No phase separation>

PASS: When the composition has been kept in a 20 L can container at room temperature (about 25°C) for 24 hours, the upper and lower layers of the can are uniform and no separated phase is observed

NG: When the composition has been kept in a 20 L can container at room temperature (about 25°C) for 24 hours, the upper and lower layers of the can are uneven and separated phases are observed

**10. Solubility evaluation**

Solubility of a material was evaluated based on ASTM E1148-02 standard. The solubility was confirmed by evaluating the amount maximally dissolved in 100 g of water at room temperature (about 25°C) according to the above standard.

**11. Evaluation of gelatinization viscosity**

A gelatinization viscosity of starch was evaluated using Amylograph-E (brabender) equipment. About 58 g or so of starch was dissolved in 450 mL of distilled water. A process of increasing the temperature of the distilled water in which the starch was dissolved from 35°C to 95°C at a rate of 1.5°C/min, maintaining the temperature at 95°C for 15 minutes, and then decreasing the temperature from 95°C to 50°C at a rate of 1.5°C/min was performed. In the above process, a peak appeared while the swelling structure of starch collapsed was confirmed, and the viscosity value of the peak was taken as the gelatinization viscosity of starch.

**12. Measurement of amylopectin and amylose contents**

Contents of amylopectin and amylose in starch were evaluated according to the method described in a paper (Potato Research 31 (1988) 241-246).
First, a sample was prepared by dissolving about 5 mg of starch in about 1 mL of sterile water (Step 1), and heated to 95°C for about 15 minutes in a constant temperature water bath (Step 2).
Subsequently, about 20 $\mu$l of the sample was placed in a cuvette (Step 3), and about 980$\mu$l of an iodine solution was added thereto and mixed (Step 4).
Subsequently, absorbance of the sample mixed with the iodine solution at wavelengths of 525 nm and 700 nm was measured and recorded, respectively (Step 5). The absorbance was measured using KLAB's OPTIZEN POP model.
About 20 $\mu$l of water was placed in another cuvette, 980 $\mu$l of the iodine solution was added thereto, and mixed (Step 6). For the solution of Step 6, absorbance at wavelengths of 525 nm and 700 nm was measured and recorded, respectively, in the same manner as in Step 5 (Step 7).
The absorbance obtained in Step 7 was subtracted from the absorbance obtained in Step 5, and the ratio (%) of amylose was confirmed according to Equation C below (Step 8).

[Equation C]

$$PA = 3.039 - \frac{7.154 \times \dfrac{OD_{700}}{OD_{525}}}{3.048 \times \dfrac{OD_{700}}{OD_{525}}} - 19.192$$

In Equation C, PA is the ratio (%) of amylose, $OD_{700}$ is the value obtained by subtracting the absorbance at a wavelength of 700 nm measured in Step 7 from the absorbance at a wavelength of 700 nm measured in Step 5, and $OD_{525}$ is the value obtained by subtracting the absorbance at a wavelength of 525 nm measured in Step 7 from the absorbance at a wavelength of 525 nm measured in Step 5.

**13. Formation of carbide (porous carbide, foam)**

After the convection test, by observing the location where the composition was loaded, it was evaluated according to the following criteria.

<Evaluation criteria>

PASS: When there is no damage to the aluminum dish and a carbide is confirmed at the location of the composition

NG: When the aluminum dish is damaged, or no carbide is confirmed

**14. Weight-based size distribution of water-absorbing polymer**

A weight-based size distribution of a water-absorbing polymer was measured according to EDANA WSP 220.3. The weight-based size distribution was obtained using stainless steel sieves (diameter: about 200 mm) with hole sizes of $150\mu m$, $300\mu m$, $600\mu m$, and $850\mu m$, respectively, according to the above standard. A sample of the water-absorbing polymer was fractionated based on the particle size using the standard and the sieves, and the weights of the respectively fractionated particles were expressed as percentages. Specifically, the sample was divided into a fraction with a size of less than $150\mu m$, a fraction in a range of 150 to 300 $\mu m$, a fraction in a range of 300 to 600 $\mu m$, a fraction in a range of 600 to 850 $\mu m$, and a fraction more than 850 $\mu m$, and the percentage relative to the weight of the entire sample was confirmed by measuring the weight of each fraction.

**Example 1.**

Preparation of composition

Water (tap water) (W), ethylene glycol (EG), monobasic ammonium phosphate (N) ($NH_4H_2PO_4$) and starch (S) (starch) were mixed in a weight ratio (W: EG: N: S) of 100: 110: 10:23.75 to prepare a mixture. The mixing was performed for 10 minutes or so at room temperature (about 25°C) under a mixing condition of 300 rpm. Here, starch extracted from corn was used as the starch. The weight ratio (amylose: amylopectin) of amylose to amylopectin in this corn starch was about 26:74 or so, and the gelatinization viscosity was about 260 BU (Brabeder unit) or so. The solubility of monobasic ammonium phosphate (N) ($NH_4H_2PO_4$) in water at 25°C is about 29 g or so.

Subsequently, a fire extinguishing composition was prepared by further mixing a water-absorbing polymer (SAP) into the mixture. The mixing of the water-absorbing polymer was performed by mixing the mixture with the water-absorbing polymer and mixing the mixture at room temperature (about 25°C) under a mixing condition of 300 rpm for 2 hours or so. The mixing was performed so that the weight ratio (water: SAP) of the water and the water-absorbing polymer (SAP) in the mixture was about 100:0.7 or so. As the water-absorbing polymer, LG Chemical's GS-803ND product was used. The CRC (Centrifuge Retention Capacity) of such a water-absorbing polymer was about 33.5 g/g or so, and the AUP (Absorption Under Pressure) was about 28.1 g/g or so. Also, in the weight-based size distribution of the water-absorbing polymer, the ratio of the fraction with a size of less than $150\mu m$ was 1.5 wt% or so, the ratio of the fraction in the range of 150 to 300 $\mu m$ was 20.5 wt%, the ratio of the fraction in the range of 300 to 600 $\mu m$ was 74.6 wt%, the ratio of the fraction in the range of 600 to 850 $\mu m$ was 3.4 wt%, and the ratio of the fraction more than 850 $\mu m$ was 0 wt%. Therefore, in the weight-based size distribution of the water-absorbing polymer, the maximum weight size is $300\mu m$ to $600\mu m$, and the weight ratio of the water-absorbing polymer belonging to the maximum weight size is 74.6 wt%.

**Manufacturing of fire extinguishing pack**

The above-prepared composition was introduced into a case to manufacture a fire extinguishing pack. The case was manufactured using an outer shell in which a PET (poly(ethylene terephthalate)) film (thickness: about $10\mu m$), a PVDC (poly(vinylidene chloride)) film (thickness: about $40\mu m$), and a PP (polypropylene) film (thickness: about $50\mu m$) were laminated in this order. The outer shell was manufactured by laminating the PET film with an adhesive on one side of the PVDC film and laminating the PP film on the other side at a temperature of about 200°C. The WVTR of the outer shell was about 0.11 $g/m^2 \cdot day$ or so. The case was manufactured using the outer shell. At this time, the case was manufactured in the form of a rectangular battery cell case (thickness of approximately 3 mm). The above-prepared composition was introduced into the case, and the case was sealed to manufacture a fire extinguishing pack.

### Example 2.

<u>Preparation of composition</u>

Water (tap water) (W), glycerin (G), monobasic ammonium phosphate (N) ($NH_4H_2PO_4$) and starch (S) (starch) were mixed in a weight ratio (W: G: N: S) of 100:150:10:23.75 to prepare a mixture. The mixing was performed for 10 minutes or so at room temperature (about 25°C) under a mixing condition of 300 rpm. Here, potato starch extracted from potato was used as the starch. The weight ratio (amylose: amylopectin) of amylose to amylopectin in this potato starch was about 20:80 or so, and the gelatinization viscosity was about 1028 BU (Brabeder unit) or so. The solubility of monobasic ammonium phosphate (N) ($NH_4H_2PO_4$) in water at 25°C is about 29 g or so. Subsequently, a fire extinguishing composition was prepared by further mixing a water-absorbing polymer (SAP) into the mixture. The mixing of the water-absorbing polymer was performed by mixing the mixture with the water-absorbing polymer and mixing the mixture at room temperature (about 25°C) under a mixing condition of 300 rpm for 2 hours or so. The mixing was performed so that the weight ratio (water: SAP) of the water and the water-absorbing polymer (SAP) in the mixture was about 100:2 or so, where the same water-absorbing polymer as in Example 1 was used as the water-absorbing polymer.

### Manufacturing of fire extinguishing pack

The above-prepared composition was introduced into a case to manufacture a fire extinguishing pack. The case was manufactured using an outer shell in which a PET (poly(ethylene terephthalate)) film (thickness: about 10$\mu$m), an aluminum foil (thickness: about 20$\mu$m), and a PP (polypropylene) film (thickness: about 70$\mu$m) were laminated in this order. The outer shell was manufactured by laminating the PET film with an adhesive on one side of the aluminum foil and laminating the PP film on the other side at a temperature of about 200°C. The WVTR of the outer shell was about 0 g/m$^2$·day or so. The case was manufactured using the outer shell. At this time, the case was manufactured in the form of a rectangular battery cell case (thickness of approximately 3 mm). The above-prepared composition was introduced into the case, and the case was sealed to manufacture a fire extinguishing pack.

### Example 3.

### Preparation of composition

Water (tap water) (W), ethylene glycol (EG), monobasic ammonium phosphate (N) ($NH_4H_2PO_4$) and starch (S) (starch) were mixed in a weight ratio (W: EG: N: S) of 100:140:10:23.75 to prepare a mixture. The mixing was performed for 10 minutes or so at room temperature (about 25°C) under a mixing condition of 300 rpm. Here, the same corn starch as used in Example 1 was used as the starch. The solubility of the monobasic ammonium phosphate (N) ($NH_4H_2PO_4$) in water at 25°C is about 29 g or so. A fire extinguishing composition was prepared by further mixing a water-absorbing polymer (SAP) into the mixture. The mixing of the water-absorbing polymer was performed by mixing the mixture with the water-absorbing polymer and mixing the mixture at room temperature (about 25°C) under a mixing condition of 300 rpm for 2 hours or so. The mixing was performed so that the weight ratio (water: SAP) of the water and the water-absorbing polymer (SAP) in the mixture was about 100:0.1 or so, where the same water-absorbing polymer as in Example 1 was used as the water-absorbing polymer.

### Manufacturing of fire extinguishing pack

The above-prepared composition was introduced into a case to manufacture a fire extinguishing pack. The case was manufactured using an outer shell in which a PET (poly(ethylene terephthalate)) film (thickness: about 10$\mu$m), an EVOH (ethylene vinyl alcohol) film (thickness: about 40$\mu$m), and a PE (polyethylene) film (thickness: about 50$\mu$m) were laminated in this order. The outer shell was manufactured by laminating the PET film with an adhesive on one side of the EVOH film and laminating the PE film on the other side at a temperature of about 200°C. The WVTR of the outer shell was about 0.27 g/m$^2$·day or so. The case was manufactured using the outer shell. At this time, the case was manufactured in the form of a rectangular battery cell case (thickness of approximately 3 mm). The above-prepared composition was introduced into the case, and the case was sealed to manufacture a fire extinguishing pack.

### Comparative Example 1.

<u>Preparation of composition</u>

Water (tap water) (W), ethylene glycol (EG), and starch (S) were mixed in a weight ratio (W: EG: S) of 100: 110: 10 to prepare a mixture. The mixing was performed for 10 minutes or so at room temperature (about 25°C) under a mixing condition of 300 rpm. Here, wheat starch extracted from wheat was used as the starch. The weight ratio (amylose: amylopectin) of amylose to amylopectin in this wheat starch was 25:75 or so, and the gelatinization viscosity was about 104 BU (Brabeder unit) or so.

Subsequently, a fire extinguishing composition was prepared by further mixing a water-absorbing polymer (SAP) into the mixture. The mixing of the water-absorbing polymer was performed by mixing the mixture with the water-absorbing polymer and mixing the mixture at room temperature (about 25°C) under a mixing condition of 300 rpm for 2 hours or so. The mixing was performed so that the weight ratio (water: SAP) of water and the water-absorbing polymer (SAP) in the mixture was about 100:0.7 or so. As the water-absorbing polymer, the same components as in Example 1 were used.

Manufacturing of fire extinguishing pack

A fire extinguishing pack was manufactured in the same manner as in Example 2 using the composition.

**Comparative Example 2.**

Preparation of composition

Water (tap water) (W), ethylene glycol (EG), monobasic ammonium phosphate (N) ($NH_4H_2PO_4$) and starch (S) were mixed in a weight ratio (W: EG: N: S) of 100: 110: 10:23.75 to prepare a mixture. The mixing was performed for 10 minutes or so at room temperature (about 25°C) under a mixing condition of 300 rpm. Here, the same wheat starch as in Comparative Example 1 was used as the starch. The solubility of the monobasic ammonium phosphate (N) ($NH_4H_2PO_4$) in water at 25°C is about 29 g or so.

Subsequently, a fire extinguishing composition was prepared by further mixing a water-absorbing polymer (SAP) into the mixture. The mixing of the water-absorbing polymer was performed by mixing the mixture with the water-absorbing polymer and mixing the mixture at room temperature (about 25°C) under a mixing condition of 300 rpm for 2 hours or so. The mixing was performed so that the weight ratio (water: SAP) of the water and the water-absorbing polymer (SAP) in the mixture was about 100:0.7 or so. As the water-absorbing polymer, LG Chemical's GS-803ND product was used. The CRC (Centrifuge Retention Capacity) of such a water-absorbing polymer was about 33.5 g/g or so, and the AUP (Absorption Under Pressure) was about 28.1 g/g or so.

Manufacturing of fire extinguishing pack

A fire extinguishing pack was manufactured in the same manner as in Example 2 using the above composition.

The evaluation results for the compositions and fire extinguishing packs of Examples and Comparative Examples above are as shown in Tables 1 to 3 below. In Tables 1 to 3 below, Convection test Tem is the measured temperature confirmed by the temperature sensor at the time point when the flame was applied for 3 minutes in the convection test.

[Table 1]

|  | Example | | |
|---|---|---|---|
|  | 1 | 2 | 3 |
| Composition freezing point (°C) | -33 | -30 | -42 |
| Viscosity (cP, 5 rpm) | 48,000 | 18,500 | 8,200 |
| Thixotropic index | 4.9 | 4.1 | 3.6 |
| Convection test | PASS | PASS | PASS |
| Chain ignition test | PASS | PASS | PASS |
| Carbide formation | PASS | PASS | PASS |
| Handleability test | PASS | PASS | PASS |
| Storage stability | PASS | PASS | PASS |

[Table 2]

| | Comparative Example | |
|---|---|---|
| | 1 | 2 |
| Composition freezing point (°C) | -33 | -33 |
| Viscosity (cP, 5 rpm) | 48,000 | 36,000 |
| Thixotropic index | 4.6 | 3.8 |
| Convection test | NG | NG |
| Chain ignition test | NG | NG |
| Carbide formation | NG | NG |
| Handleability test | PASS | PASS |
| Storage stability | PASS | PASS |

## Claims

1. A composition comprising: a solvent; and
   a carbonizable organic material having a gelatinization viscosity of 150 BU or more.

2. The composition according to claim 1, wherein a thixotropic index is 3.0 or more, and the thixotropic index is a ratio of a viscosity under conditions of 25°C and 0.5 rpm to a viscosity under conditions of 25°C and 5 rpm.

3. The composition according to claim 1, wherein the solvent has a freezing point of - 10°C or more.

4. The composition according to claim 1, wherein the solvent is water.

5. The composition according to claim 1, comprising the solvent in an amount of 50 to 95 wt%.

6. The composition according to claim 1, wherein the carbonizable organic material is polysaccharide, polyhydric alcohol, cellulose, lignin, BSPPO, a carbonizable polymer, or a melamine compound.

7. The composition according to claim 1, wherein the carbonizable organic material is starch containing amylose and amylopectin.

8. The composition according to claim 7, wherein the starch contains 150 parts by weight to 900 parts by weight of the amylopectin relative to 100 parts by weight of the amylose.

9. The composition according to claim 1, comprising 0.01 to 50 parts by weight of the carbonizable organic material relative to 100 parts by weight of the solvent.

10. The composition according to claim 1, further comprising a carbonized catalyst generating agent.

11. The composition according to claim 10, wherein the carbonized catalyst generating agent has solubility of 5 g or more in 100 g of water at 25°C.

12. The composition according to claim 10, wherein the carbonized catalyst generating agent is phosphoric acid, a phosphoric acid compound, a phosphonate compound, or a phosphate compound.

13. The composition according to claim 10, comprising 0.5 to 65 parts by weight of the carbonized catalyst generating agent relative to 100 parts by weight of the solvent.

14. A fire extinguishing pack comprising: a case; and
    the fire extinguishing composition of any one of claims 1 to 13 present in the case.

15. A battery module comprising: a plurality of battery cells; and
the fire extinguishing composition according to any one of claims 1 to 13 disposed between the battery cells.

16. A battery module comprising: a plurality of battery cells; and
the fire extinguishing pack of claim 14 disposed between the battery cells.

## INTERNATIONAL SEARCH REPORT

| International application No. |
|---|
| **PCT/KR2023/015106** |

### A. CLASSIFICATION OF SUBJECT MATTER

**A62D 1/00**(2006.01)i; **A62D 1/06**(2006.01)i; **A62C 35/02**(2006.01)i; **A62C 3/16**(2006.01)i; **H01M 10/42**(2006.01)i; **H01M 50/24**(2021.01)i; **H01M 50/682**(2021.01)i; **H01M 50/204**(2021.01)i

According to International Patent Classification (IPC) or to both national classification and IPC

### B. FIELDS SEARCHED

Minimum documentation searched (classification system followed by classification symbols)

A62D 1/00(2006.01); A61F 7/00(2006.01); C09K 21/04(2006.01); C09K 21/10(2006.01); H01M 10/658(2014.01); H01M 50/231(2021.01); H01M 50/233(2021.01); H01M 50/244(2021.01); H01M 50/403(2021.01); H01M 50/44(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 호화 점도(pasting viscosity), 탄화성 유기물(carbonized organic), 소화용 조성물 (fire extinguishing composition), 배터리 셀(battery cell)

### C. DOCUMENTS CONSIDERED TO BE RELEVANT

| Category* | Citation of document, with indication, where appropriate, of the relevant passages | Relevant to claim No. |
|---|---|---|
| X | US 5984953 A (SABIN, M. W. et al.) 16 November 1999 (1999-11-16)<br>See claims 1-9; columns 5-18; and figure 1. | 1-9 |
| Y | | 10-16 |
| Y | US 2020-0369963 A1 (CHESTNUT SPRINGS LLC) 26 November 2020 (2020-11-26)<br>See claims 1-6; and paragraphs [0049]-[0059]. | 10-13 |
| Y | WO 2021-239378 A1 (ZENTRUM FÜR SONNENENERGIE- UND WASSERSTOFF-FORSCHUNG BADEN-WÜRTTEMBERG GEMEINNÜTZIGE STIFTUNG) 02 December 2021 (2021-12-02)<br>See claims 1-14; and figures 1-4. | 14-16 |
| A | CN 215451660 U (DONGGUAN K-TECH NEW ENERGY CO., LTD. et al.) 07 January 2022 (2022-01-07)<br>See entire document. | 1-16 |

☑ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **11 January 2024** | **11 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2023/015106** |

**C.     DOCUMENTS CONSIDERED TO BE RELEVANT**

| Category* | Citation of document, with indication, where appropriate, of the relevant passages | Relevant to claim No. |
| --- | --- | --- |
| A | CN 113241501 A (UNIVERSITY OF SCIENCE AND TECHNOLOGY OF CHINA) 10 August 2021 (2021-08-10)<br>    See entire document. | 1-16 |

Form PCT/ISA/210 (second sheet) (July 2022)

## INTERNATIONAL SEARCH REPORT
**Information on patent family members**

International application No.

**PCT/KR2023/015106**

| Patent document cited in search report | | | Publication date (day/month/year) | Patent family member(s) | | | Publication date (day/month/year) |
|---|---|---|---|---|---|---|---|
| US | 5984953 | A | 16 November 1999 | AU | 1999-41967 | A1 | 06 December 1999 |
| | | | | AU | 1999-41967 | B2 | 06 June 2002 |
| | | | | CA | 2333295 | A1 | 25 November 1999 |
| | | | | CN | 1298302 | C | 07 February 2007 |
| | | | | CN | 1310600 | A | 29 August 2001 |
| | | | | EP | 1079773 | A1 | 07 March 2001 |
| | | | | EP | 1079773 | B1 | 01 February 2006 |
| | | | | EP | 1733706 | A2 | 20 December 2006 |
| | | | | EP | 1733706 | A3 | 28 April 2010 |
| | | | | JP | 2002-515579 | A | 28 May 2002 |
| | | | | WO | 99-59508 | A1 | 25 November 1999 |
| US | 2020-0369963 | A1 | 26 November 2020 | US | 10752840 | B2 | 25 August 2020 |
| | | | | US | 11326104 | B2 | 10 May 2022 |
| | | | | US | 11608472 | B2 | 21 March 2023 |
| | | | | US | 2018-0142156 | A1 | 24 May 2018 |
| | | | | US | 2022-0220385 | A1 | 14 July 2022 |
| | | | | WO | 2018-098276 | A1 | 31 May 2018 |
| WO | 2021-239378 | A1 | 02 December 2021 | CN | 115943519 | A | 07 April 2023 |
| | | | | EP | 3916835 | A1 | 01 December 2021 |
| | | | | JP | 2023-527215 | A | 27 June 2023 |
| | | | | KR | 10-2023-0021013 | A | 13 February 2023 |
| | | | | US | 2023-0216137 | A1 | 06 July 2023 |
| CN | 215451660 | U | 07 January 2022 | None | | | |
| CN | 113241501 | A | 10 August 2021 | None | | | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- KR 1020220125266
- KR 1020220125271
- KR 1020230041417

### Non-patent literature cited in the description

- *Potato Research*, 1988, vol. 31, 241-246